# NOUVEAU FASCICULE DE BREVET EUROPEEN

(11) **EP 4 008 839 B2**
(45) Date de publication et mention de la décision concernant l'opposition: **02.12.2026**
(45) Mention de la délivrance du brevet: 01.05.2024
(21) Numéro de dépôt: 21215334.0
(22) Date de dépôt: 21.06.2019
(51) Int. Cl.: E01B 31/04, E01B 27/14, B23D 45/16, B23D 59/00, E01B 31/06, B23D 45/00

(54) **SYSTÈME DE TRONÇONNEUSE, NOTAMMENT POUR RAILS DE VOIE DE CHEMIN FERRÉ**
WERKZEUGMASCHINENSYSTEM, INSBESONDERE FÜR ARBEITEN AN EINER EISENBAHNSTRECKE
MACHINE-TOOL SYSTEM, PARTICULARLY FOR WORK ON A RAILWAY LINE

(30) Priorité: 22.06.2018 FR 1855597
(43) Date de publication de la demande: 08.06.2022
(62) Numéro(s) de document de la (des) demande(s) initiale(s) en application de l'article 76 CBE: 19742452.6 / 3 810 857
(73) Titulaire: Geismar, 92200 Neuilly sur Seine (FR)
(72) Inventeur: GASPARD, Olivier, 38490 SAINT ONDRAS (FR); THUBERT, Olivier, 38420 DOMÈNE (FR); TAVERGNIER, Quentin, 69003 LYON (FR)
(74) Mandataire: Weinstein Services & Conseils

(56) Documents cités:
- WO-A1-2018/097194
- WO-A2-2008/087285
- WO-A2-2013/187837
- FR-A1- 2 508 071
- US-A- 4 068 415
- US-A- 5 486 136

## Description

L'invention concerne un système de tronçonneuse notamment pour rail de voie ferrée, selon le préambule de la revendication 1.

Un système de tronçonneuse de ce type est décrit dans le document US 4 068 415 A. Un système de tronçonneuse pour rails est aussi connu du document US 5 486 136 A. Ce système présente cependant l'inconvénient de ne permettre un tronçonnage de rail à partir d'un seul côté de celui-ci et de nécessiter un démontage de l'ensemble du système de rail pour permettre un tronçonnage à partir de l'autre côté du rail.

L'invention a pour but de pallier cet inconvénient.

Ce but est atteint grâce aux caractéristiques de la partie caractérisante de la revendication 1.

D'autres caractéristiques de l'invention sont énoncées dans des revendications dépendantes.

Optionellement, le câble est un câble multifilaire pour être souple et limiter l'échauffement du câble.

Optionellement, chaque machine-outil comporte une carte machine spécifique qui identifie la machine et est adaptée pour dialogue avec la batterie et est pourvue d'un programme de gestion du fonctionnement de la machine, en coopération avec la batterie.

Optionellement, la batterie comporte une carte de commutation de la voie de décharge et de la voie de charge de la batterie, une carte BMS de pilotage de la carte de commutation et qui est adaptée pour dialoguer avec la carte machine branché sur la batterie.

Optionellement, la batterie est logée dans un boîtier pourvu d'un dispositif interne d'amortissement de vibrations et de chocs.

Optionellement, le dispositif d'amortissement comporte un ensemble de cales souples maintenues en place par des entretoises.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 est une vue éclatée, en perspective du système machine-outil selon l'invention, montrant une pluralité de machines-outils, utilisables dans ce système ;
- la figure 2 est une vue en perspective du système machine-outil selon l'invention, comportant, à titre de machine-outil, une tronçonneuse de rails d'une voie de chemin de fer ;
- les figures 3A à 3D sont des vues en perspective de la tronçonneuse de la figure 1, montrant celle-ci dans quatre positions de fonctionnement différentes ;
- la figure 4 est une vue en perspective de l'assemblage du sac à dos et de la batterie ;
- la figure 5 est une vue éclatée de l'assemblage de la figure 4 ;
- la figure 6 est une vue en perspective de la platine connectique de la batterie ;
- les figures 7A à 7F sont des vues en perspective illustrant les différents composants du boîtier de la batterie ;
- la figure 8 est une vue éclatée montrant la batterie et le boîtier de logement de celle-ci ;
- la figure 9 est une vue en coupe le long de la ligne IX-IX de la figure 8, à travers le boîtier enfermant la batterie ;
- les figures 10A et 10B sont deux vues des deux faces d'une carte machine selon l'invention ;
- la figure 11A est une vue en perspective d'une tronçonneuse de rails selon l'invention ;
- la figure 11B est une vue de détail à plus grande échelle d'une partie intérieure du carter de tronçonneuse de la figure 11A ;
- la figure 12 est une vue en coupe illustrant le dispositif d'entrainement en rotation du disque de la tronçonneuse selon la figure 11 ;
- la figure 13 est une vue à plus grand échelle de la partie XIII de la figure 12 ; et
- la figure 14 est une vue schématique illustrant la coupe d'un rail, après retournement d'une tronçonneuse selon l'invention ; et
- la figure 15 est une vue synoptique du fonctionnement du système machine-outil selon l'invention.

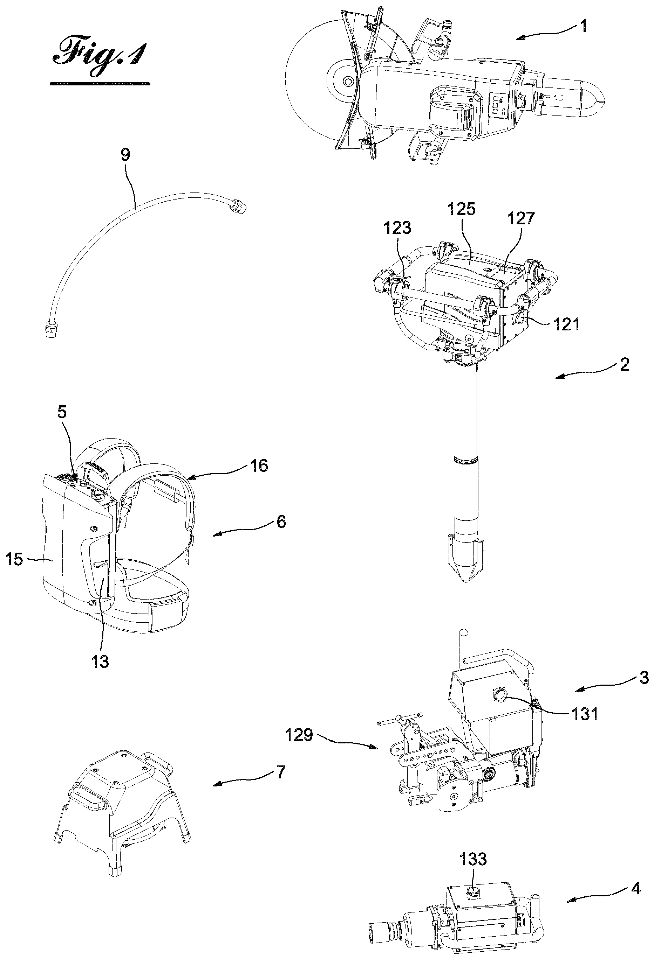

La figure 1 illustre, de façon générale, une pluralité de machines-outils utilisables dans le cadre du système de tronçonneuse selon l'invention, à savoir, dans l'exemple représenté, une tronçonneuse 1, notamment mais non exclusivement des rails d'une voie de chemin de fer, un vibrateur 2 qui permet, par exemple, de compacter le ballast entre les traverses, une perceuse 3, par exemple, de rails destinée à percer des trous dans les rails pour la fixation des éclisses ou tresses de connexion, et une clé à chocs 4 permettant de visser ou dévisser les attaches ou des boulons d'éclisse. Les machines sont équipées d'un moteur électrique et sont alimentées en puissance électrique par une batterie 5 intégrée dans un ensemble 6 portable par l'utilisateur d'une machine, avantageusement en forme d'un sac à dos. Chaque machine est connectable à la batterie par un cordon ou câble de décharge 9. Les machines étant des machines de forte puissance par exemple de l'ordre de 3 à 10 KW, le cordon 9, pour le ne pas être gênant pour l'utilisateur est un câble multifilaire souple comportant une multitude de conducteurs électriques de faible section transversale ce qui permet au cordon d'être souple et de limiter l'échauffement par le courant électrique circulant entre la batterie et le moteur électrique de la machine branchée sur la batterie.

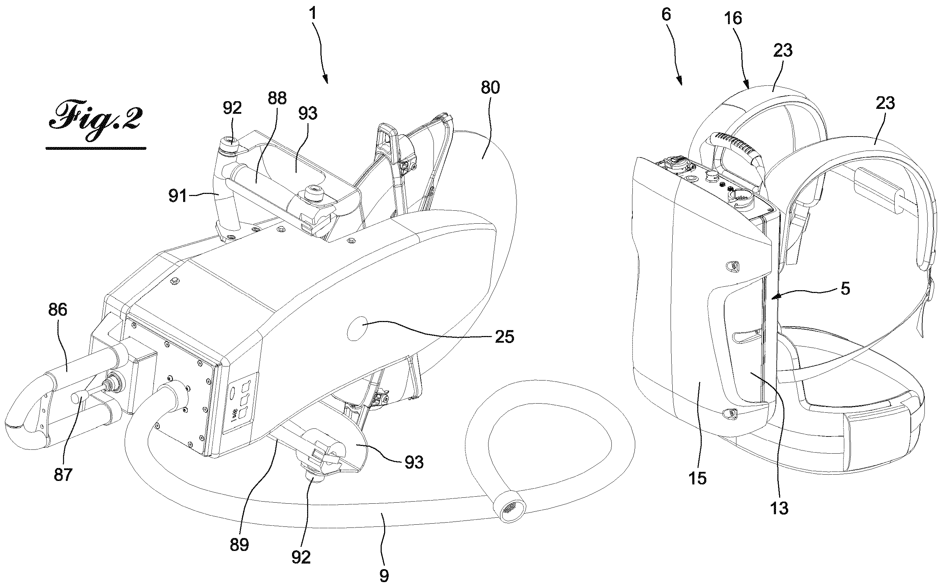

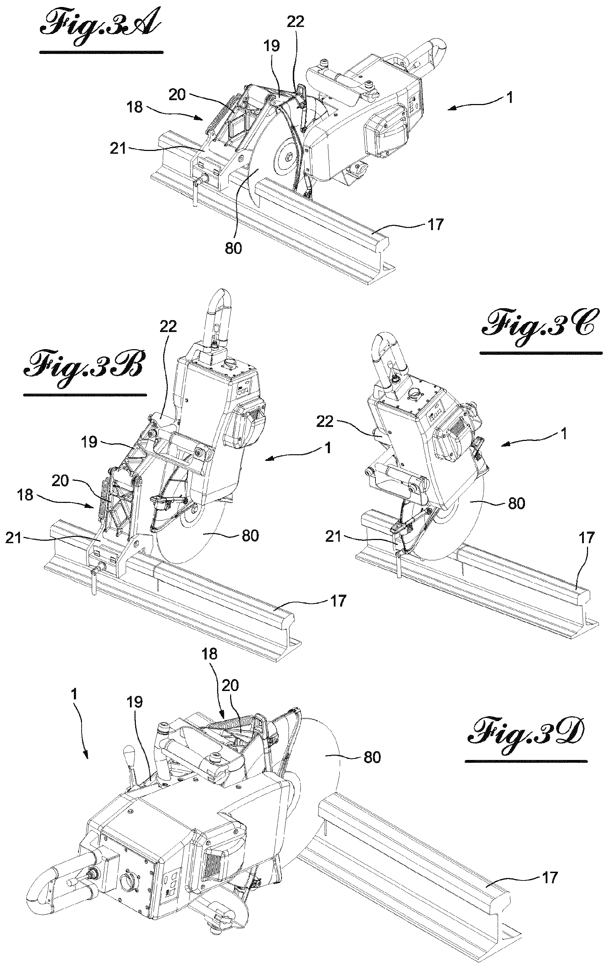

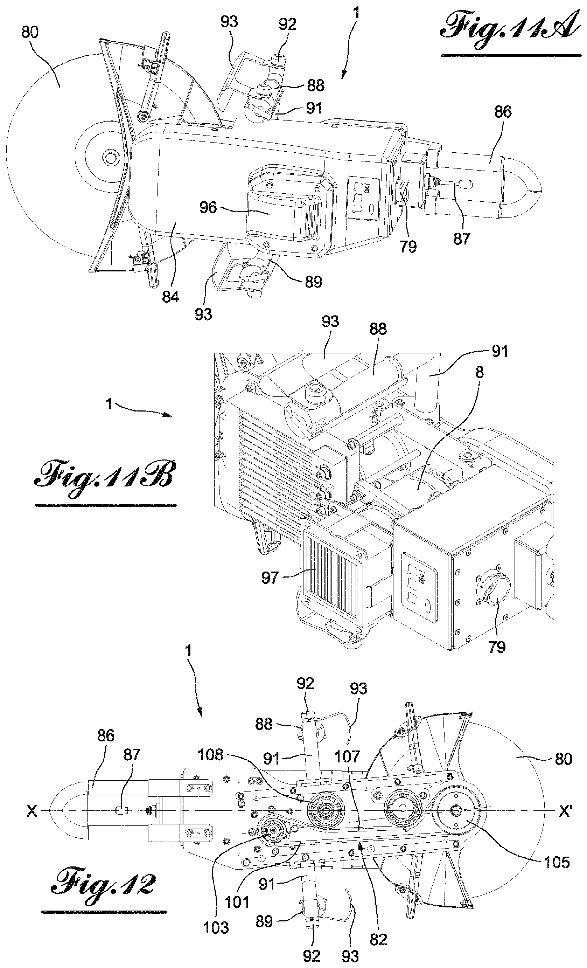

Le système selon l'invention sera décrit ci-après, à titre d'exemple non limitatif dans son mode de réalisation comportant, comme machine-outil, une tronçonneuse, notamment mais pas exclusivement, de rails d'une voie de chemin de fer, telle que représentée en 1 aux figures 1 et 2, aux figures 3A à 3D et aux figures 11 à 13.

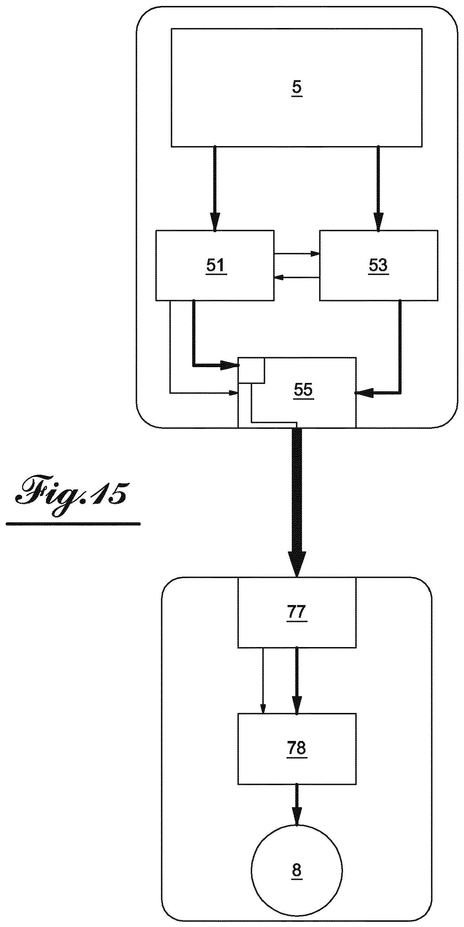

Comme il ressort des figures, dans le système machine-outil selon l'invention, la tronçonneuse 1 est pourvue d'un moteur électrique indiqué par la référence 8 sur les figures 11B et 15, et entraîne par la batterie électrique 5 disposée dans un boîtier 13 en forme d'une coque sur laquelle est fixée une sur-coque 15. L'ensemble formé par la sur-coque 15 et le boîtier 5 est complété par un dispositif de portage ergonomique 16 pour former l'ensemble 6 de la structure de sac à dos portable par un opérateur de la machine-outil. L'ensemble de portage permet de s'affranchir du poids de la batterie sur la machine. Un chargeur de batterie 7 permet la recharge rapide de la batterie par exemple en 2 heures (figure 1).

Comme le montre les figures 3A à 3D, pour couper un rail 17, la tronçonneuse 1 est montée pivotante sur un dispositif étau de support et de fixation 18 à deux bras articulés 19, 20. L'un des deux bras, à savoir le bras 20 est pourvu à son extrémité libre d'un étau 21 de fixation par serrage sur le rail, tandis que l'autre bras 19 porte à son extrémité libre un axe 22 sur lequel est montée de façon pivotante la tronçonneuse. A cette fin, la tronçonneuse comporte une douille de réception de l'axe, notée 25 (page 2). Au fond de la douille est prévu un contact électrique (non représenté) qui est fermé lorsque la machine est correctement mise en place sur l'axe 22 de l'étau.

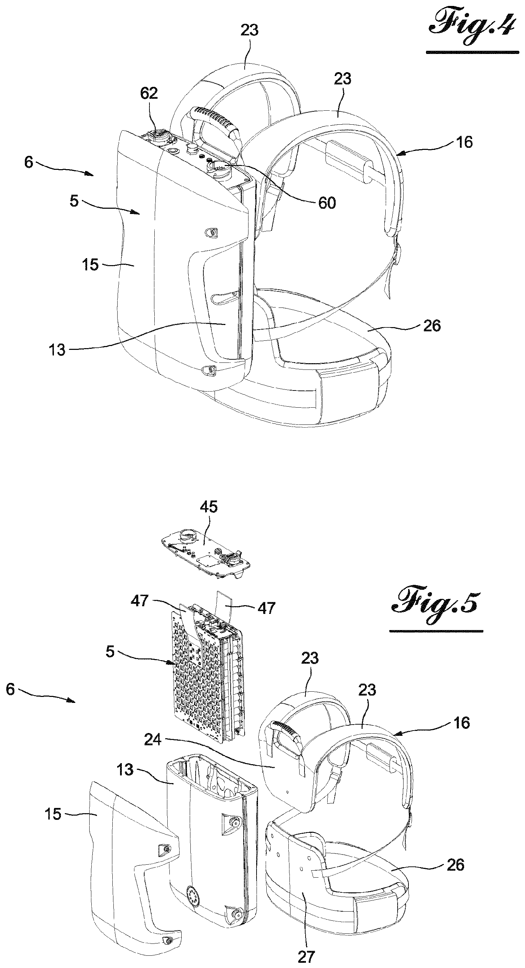

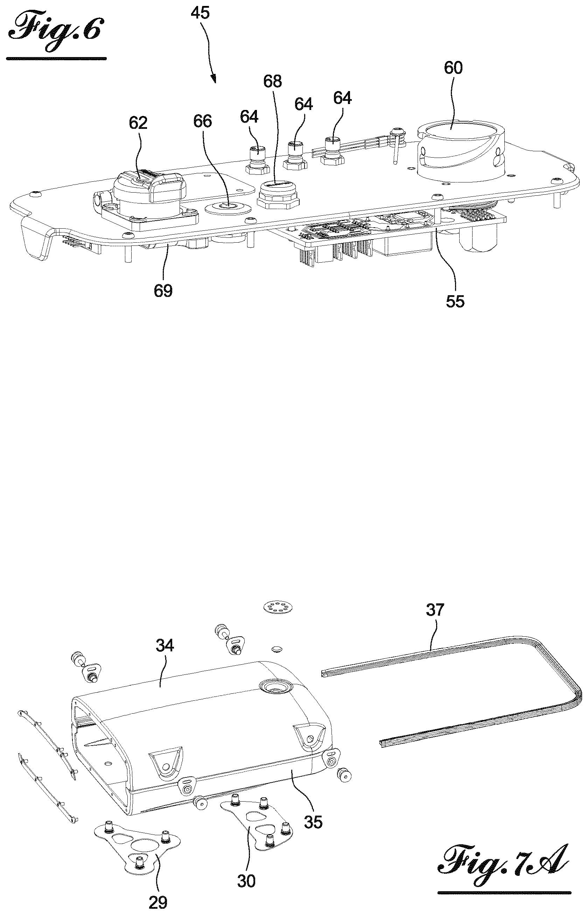

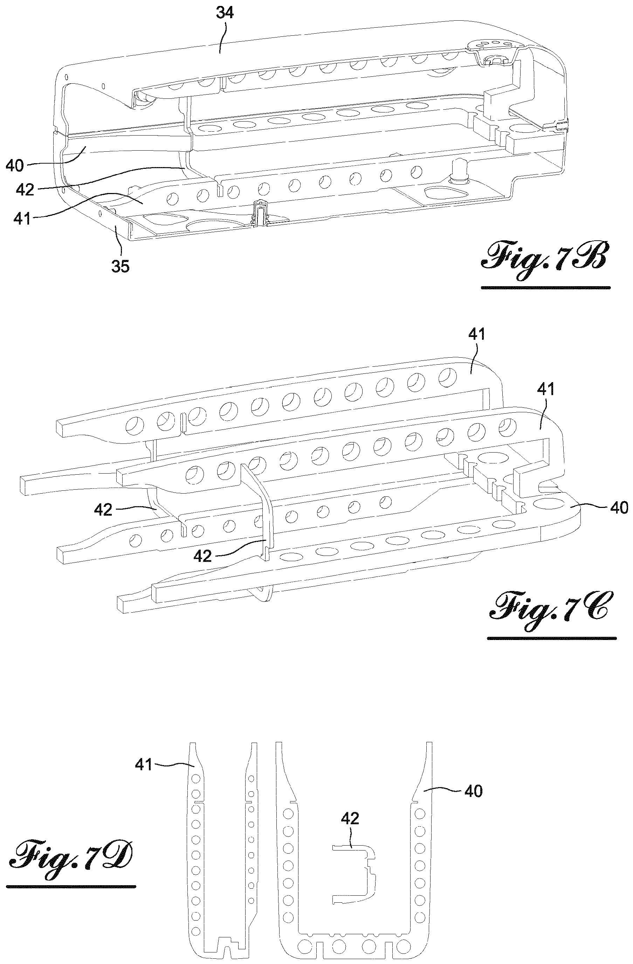

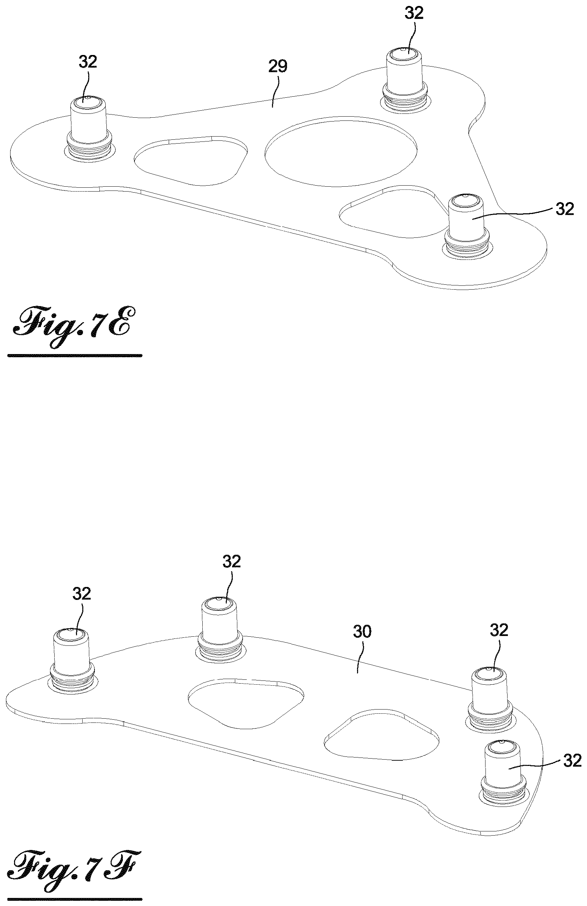

On décrira ci-après plus en détail l'ensemble de portage de la batterie et de cette dernière, en se référant aux figures 4 à 9. La vue éclatée de la figure 5 montre les différents composants de l'ensemble, à savoir la batterie 5, le boîtier 13 en forme de coque, la sur-coque 15 et le dispositif de portage 16 comportant essentiellement deux bretelles 23, chacune pour une épaule de l'opérateur, qui sont montées sur une plaque de fixation 24 et une sangle abdominale réglable 26 dont la partie médiane arrière 27 est élargie pour permettre le montage de la sangle sur le boîtier 13. Pour la fixation du dispositif de portage 16 sur le boîtier/coque 13, ce dernier est pourvu de platines 29, 30 (figures 7E, 7F) qui sont formées par des tôles à coller à l'intérieur de la coque et qui supportent des inserts étanches et taraudés 32 de fixation du dispositif de portage 16 sur le boîtier à l'aide de vis de fixation des parties 24, 27 du dispositif 16 dans les inserts taraudés 32. Les platines sont larges pour offrir une bonne surface d'adhérence et une bonne portée pour reprendre les efforts. Les inserts étanches 32 sont sertis sur la tôle avant le collage sur la coque. Le boîtier est conçu pour constituer l'élément de protection extérieur de la batterie et la sur-coque 15 fixé sur la coque procure une sécurité supplémentaire.

Le boîtier coque 13 de protection extérieure de la batterie est constitué de deux demi-coques 34, 35 réalisées en fibre de verre/résine polyester se caractérisant par une forte résistance et un excellent rapport rigidité/masse. La référence 37 désigne un cache de joint d'étanchéité interposé entre les deux demi-coques. Un ensemble de cales souples 40 et 41 (figure 7C) est positionné sur les côtés intérieurs de la coque. Ces cales permettent le bon positionnement de la batterie dans la coque et ont une fonction d'amortissement. Elles sont maintenues en place par des entretoises 42 jusqu'au moment du montage de la batterie dans la coque. En se référant aux figures 7B et 7C, on constate que la cale 40 est située au niveau de la jonction des deux demi-coques, tandis que les deux cales 41 sont disposées dans des plans perpendiculaires à la cale 40 près des côtés latéraux du boîtier.

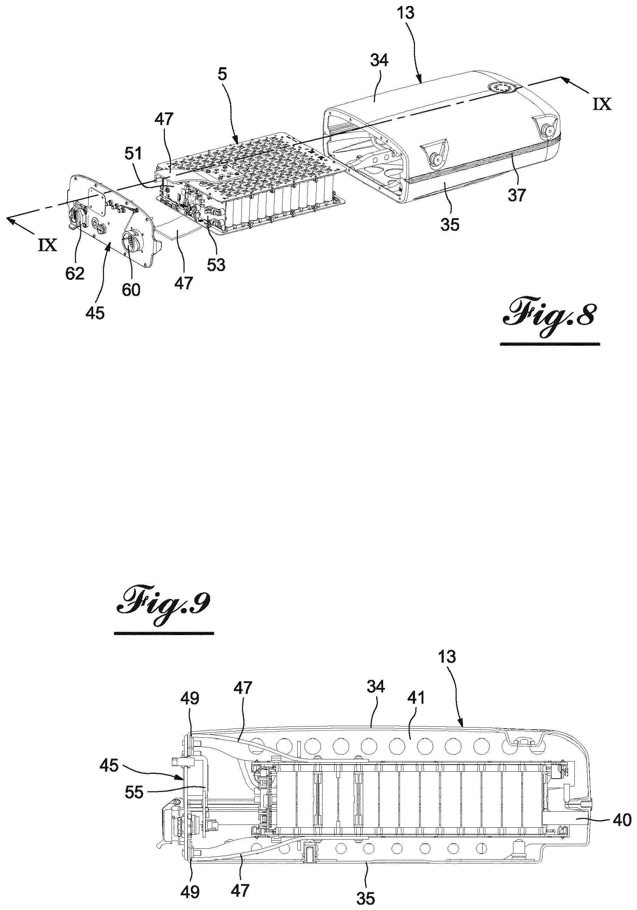

Concernant la batterie 5 destinée à être placée dans le boîtier 13, elle est équipée d'une platine connectique 45 (figures 8, 9) située au niveau de l'ouverture du boîtier. Elle est accueillie par les cales souples antichoc 40, 41 qui constituent une structure de type squelette de mousses. Deux languettes 47 sont fixées chacune sur une grande face latérale de la batterie, au niveau de son extrémité côté ouverture. Elles sont destinées à supprimer le mouvement de la batterie vers la platine connectique tout en assurant une absorption des chocs. A cette fin, lorsque la batterie est placée dans le boîtier, les extrémités libres des languettes souples 47 viennent en prise en 49 derrière un élément de butée à l'entrée du boîtier.

Comme le montre les figures 8 et 9, à la batterie sont associées une carte BMS (Batterie Management System) 51, une carte de commutation 53 et une carte connecteur 55, qui sont placées entre le coeur de la batterie et la platine connectique 45. Le coeur de la batterie, dans l'exemple représenté, est constitué de 130 cellules du type Li-lon. Les cellules sont maintenues les unes à côté des autres par deux éléments de maintien (non représenté) disposés chacun à une extrémité du bloc des cellules. Deux cartes électroniques sont prévues pour réaliser l'interconnexion des cellules et à recevoir les capteurs de température.

La platine connectique 45 (figures 6 et 8) porte sur sa face extérieure, un connecteur de décharge 60 sur lequel on raccorde le cordon de décharge qui constitue le câble de puissance, pour relier la batterie à la machine utilisée. Ce connecteur est étanche, il est équipé d'un bouchon amovible pour le protéger quand le cordon n'est pas branché. La platine porte en outre un connecteur de charge 62 pour relier un chargeur à la batterie, trois connecteurs 64 qui permettent de brancher des accessoires à la batterie, tel que l'interface homme/machine IHM, une lampe LED et le cordon de recharge USB, un bouton de mise en route 66 et une trappe 68 d'accès à une carte mémoire. Le connecteur de charge 62 est équipé d'un couvercle à fermeture automatique qui permet de protéger le contact électrique quand le chargeur n'est pas branché. Le bouton de mise en route 66 est un bouton lumineux. Quand il est allumé, la batterie est en route. Quand il est éteint, la batterie est arrêtée. La batterie passe en mode "veille" au bout de 10 minutes après avoir été éteinte (mode économie d'énergie) ou au bout de 10 minutes d'inactivité. Des modes de clignotement sont prévus pour signaler différents types de défauts à l'utilisateur. La platine porte également un respirateur 69. Concernant le respirateur 69, comme la batterie est étanche, il permet d'équilibrer la pression entre l'intérieur et l'extérieur de la batterie en évitant toute introduction d'humidité. La carte mémoire contient le paramètre de fonctionnement de la batterie ainsi que des informations sur les machines utilisées.

La carte connecteur 55 porte un transformateur 48 V/5 V qui permet l'alimentation des accessoires, l'alimentation de la carte machine par l'initiation du système, la connectique pour la répartition des faisceaux accessoires et le CAN BUS, la connectique pour le raccordement de mise en route 66, un buzzer d'alarme "batterie faible" indiquant à l'utilisateur qu'il faut recharger la batterie afin de ne pas endommager les cellules, les plots de raccordement de puissance de la batterie et un connecteur de décharge multibroches. En sortie de la batterie 5, il y a deux câbles de puissance de grosse section qui ne sont pas souples. Le connecteur multibroches a pour fonction de répartir la forte puissance sur une pluralité de broches compatibles avec la pluralité de conducteurs de plus petite section du cordon ou câble de décharge, qui est conçu pour être le plus souple possible pour faciliter l'utilisation des machines et pour limiter l'échauffement du cordon. Plus précisément, dans un exemple avantageux de mise en œuvre du connecteur multibroches, celui-ci comporte vingt quatre broches, à savoir dix broches pour le + 48 V, dix broches pour le 0 V, une broche + 5 V, une broche 0 V, une broche pour le CAN haut et une broche pour le CAN bas. Le câble de décharge comporte un conducteur pour chaque broche. La carte connecteur comporte en outre un relais qui protège la voie de charge qui a pour fonction d'empêcher la présence de courant sur la voie de charge, quand aucun connecteur n'est branché dessus. Un circuit est prévu dans le câblage du connecteur de charge qui permet la fermeture du circuit de charge au moment où il est branché sur la batterie.

La carte BMS 51 assure des fonctions de sécurité, à savoir la protection contre les surcharges, une protection contre les court-circuits et la surveillance de la température. Elle assure aussi la gestion des cellules, à savoir la surveillance de la décharge et de la charge des cellules. Puis la carte accomplit des fonctions de communication, c'est-à-dire le pilotage de la carte de commutation, la gestion de la carte mémoire, du buzzer et de la l'interface homme/machine IHM et, le cas échéant, des liaisons avec d'autres applications.

La carte de commutation 53 comporte un relais électronique qui est piloté par la carte BMS 51 et à pour fonction d'assurer la fonction de coupure de la puissance sur la voie de décharge de la batterie, la gestion de la voie de charge, la gestion du circuit de pré-charge des contrôleurs moteur des machines, et la protection contre des surcharges et des court-circuits.

Après la description de la partie du système, située du côté de la batterie, des différents composants de celle-ci et de leurs fonctions, on décrira ci-après la partie du système située du côté des machines-outils.

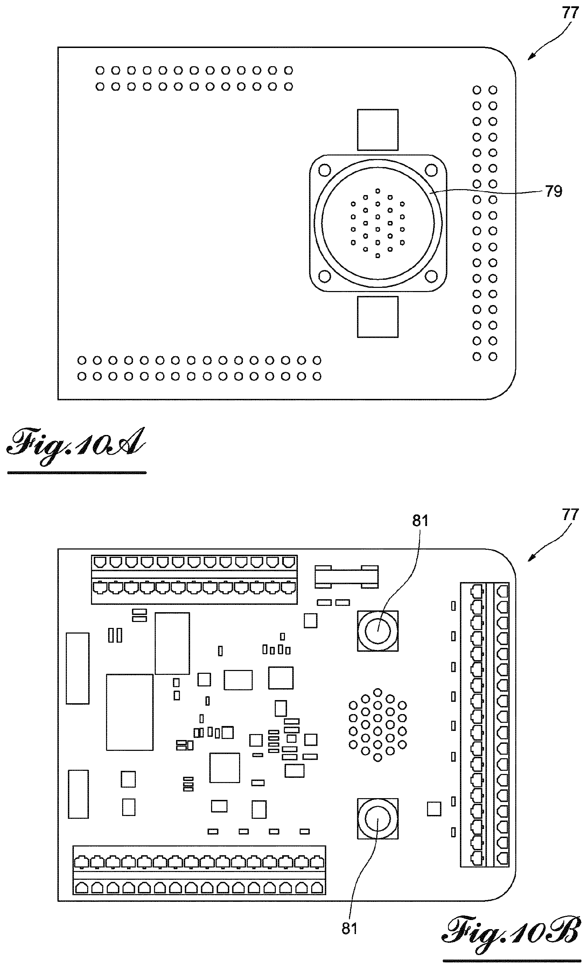

Chaque machine qui sera branchée sur la batterie 5 est équipée d'une carte machine 77, dont les deux faces sont représentées aux figures 10A et 10B, et qui porte un connecteur multibroches 79 permettant le branchement du cordon de décharge, et deux plots de puissance 81 qui réunissent respectivement les dix broches de + 48 V et les dix broches de 0 V, pour l'alimentation en puissance électrique du contrôleur moteur. La carte comporte aussi les bornes de connexion pour les entrées/sorties et est adaptée pour gérer les entrées/sorties logiques. La carte a aussi pour fonction d'établir un dialogue avec la batterie pour l'identification de la machine lors du raccordement et d'envoyer des commandes au contrôleur moteur 78 pour le pilotage du moteur.

Chaque carte machine dispose d'un programme qui gère le fonctionnement spécifique de la machine selon la logique de fonctionnement suivante : le cordon de décharge est branché sur la carte machine, la tension permanente 0/5 V permet la mise en route de la carte machine, un dialogue crypté sur le CAN BUS s'engage entre la carte machine et la carte BMS 51. Si la carte machine est reconnue, la carte BMS autorise la fermeture de la voie de décharge 48 V. La carte de commutation 53 gère la pré-charge du contrôleur moteur 78. La machine est prête à être utilisée si les conditions de mise en route sont réunies.

Concernant les machines-outils utilisables dans le cadre du système selon l'invention, on décrira ci-après plus en détail la tronçonneuse 1 telle que représentée aux figures 1, 3A à 3D et 11 à 13. Cette tronçonneuse comporte un disque de tronçonnage 80 entraîné en rotation, par l'intermédiaire d'un dispositif de transmission 82, par un moteur électrique 8 enfermé dans un carter 84. La tronçonneuse est pourvue à son extrémité opposée à celle du disque d'une poignée 86 de commande pourvue d'un levier pivotant 87 de commande du moteur pour que celui-ci fasse tourner le disque dans l'un ou l'autre sens de rotation par pivotement du levier vers le haut ou vers le bas. La tronçonneuse comporte en outre une paire de poignées de sécurité, à savoir une poignée supérieure 88 et une poignée inférieure 89. Il est à noter que, pour mettre en route le disque après avoir monté la machine sur l'étau de support 18 en enfilant la machine grâce à sa douille 25 sur l'axe 22, ce qui provoque la fermeture du contact électrique au fond de la douille, l'opérateur doit actionner à la fois le levier de commande 87 en le faisant pivoter vers le haut et la poignée de sécurité supérieure 88 ou 89 pour actionner un contact intégré à cette poignée. Si cet enchaînement des opérations n'est pas fait dans l'ordre décrit, la machine ne fonctionnera pas. Comme on le voit sur les figures, chaque poignée est située soit au-dessus, soit en-dessous du carter, à une certaine distance de la surface supérieure ou inférieure de celle-ci, et est portée par une tige 91 qui s'étend dans un plan parallèle au plan du disque, en faisant saillie au-dessus et en-dessous du carter et se termine par une extrémité en forme d'un pied 92. Chaque poignée 88, 89 s'étend perpendiculairement à sa tige de support et au plan du disque, à proximité du pied de la tige. A chaque poignée est associée une garde 93. Sur la face latérale d'extrémité sur laquelle est située la poignée de commande 86, on voit le connecteur multibroches 79 de branchement du cordon de décharge. Sur un côté latéral du carter est fixé un capot 96 qui recouvre un filtre à air 97 à travers lequel, par un ventilateur électrique interne, est aspiré un flux d'air de refroidissement du moteur, qui traverse le moteur et est rejeté à l'avant côté disque. L'ouverture d'aspiration se trouve du côté opérateur. Le filtre à air permet d'éviter que des particules métalliques produites par le tronçonnage du rail ou des particules abrasives provenant de l'usure du disque puissent s'introduire dans le moteur. Sur l'autre côté latéral du châssis est prévue la douille 25 de réception de l'axe de support de l'étau.

Pour que l'opérateur ne commence pas une coupe sans être sûr de pouvoir la terminer, un afficheur LED est prévu sur le carter, qui donne à l'opérateur une information sur la quantité d'énergie restante disponible dans la batterie, par rapport à la quantité d'énergie nécessaire pour faire une coupe complète, suite à une analyse faite par la carte machine qui allume les LEDS en fonction du résultat. Une LED par exemple verte signifie que la coupe peut être commencée et il y a assez d'énergie pour la finir. L'allumage d'une LED par exemple jaune, indique qu'une dernière coupe complète est encore possible. Par contre, lorsqu'il y a une LED rouge, l'opérateur ne doit pas commencer une coupe car il n'y a pas assez d'énergie dans la batterie pour la finir. L'afficheur comporte encore une LED "encrassement de filtre" qui indique à l'opérateur qu'il a atteint un nombre de coupe qui nécessite le remplacement du filtre à air.

Une particularité très avantageuse de la tronçonneuse selon l'invention réside dans le fait qu'elle permet d'effectuer une coupe d'un rail par retournement, sans que l'opérateur soit obligé de démonter la machine de l'axe de l'étau, comme cela est illustré par les figures 3A à 3D.

La figure 3A montre la tronçonneuse, montée sur l'axe de l'étau de support, aux deux bras articulés 19, 20. Comme indiqué plus haut, l'opérateur a commencé la coupe en actionnant la poignée de sécurité 88 et le levier 87 de commande de rotation lorsqu'il saisit la poignée 86. Si la coupe n'est pas possible en une seule fois, l'opérateur sort le disque de l'entame de la coupe, arrête la rotation du disque en relâchant le levier de commande et effectue le retournement de la machine sans démontage de l'axe d'étau 22, en la faisant passer de la position de la figure 3B, sur un côté du rail, dans la position selon la figure 3C sur l'autre côté du rail. Pour continuer la coupe, l'opérateur actionne l'autre poignée de sécurité 89 qui est maintenant la poignée supérieure et le levier de commande 87 qu'il fait pivoter dans le sens inverse par rapport à la première phase de façon que le disque puisse tourner maintenant dans le sens inverse.

Afin de pouvoir effectuer une coupe par retournement sans démontage de la tronçonneuse de l'étau, la douille de réception de la vis d'étau est placée dans l'axe qui passe à travers le centre du disque 80 et la poignée de commande 86, 87 et est indiqué par les références X, X', de manière à avoir une symétrie au niveau de la cinématique de l'ensemble des leviers constitué par les bras d'étau pour assurer les mêmes conditions de fonctionnement dans les deux sens de rotation du disque. La figure 12 montre la configuration particulière des composants du dispositif de transmission du mouvement rotatif de l'axe moteur à l'axe du disque. Cette transmission est effectuée à l'aide d'une courroie de transmission 101 sans fin, qui transmet le mouvement de rotation d'un galet 103 solidaire en rotation de l'axe du moteur à un galet 105 solidaire en rotation du disque. Pour éviter qu'un des brins de la courroie 101, à savoir le brin 107, passe sur l'axe de la vis d'étau, ce brin est dévié par un galet 108.

La courroie 101 est avantageusement une courroie élastique, striée dans le sens de la longueur, qui ne nécessite pas de réglage de tension, ni d'entretien. Pour éviter que la mise en place de la courroie doive être effectuée à l'aide d'un outil de montage spécifique, l'invention prévoit l'utilisation d'un galet 109, qui est supporté par un levier 111 monté pivotant autour d'un axe 113 et susceptible d'être fixé en position par une vis 115.

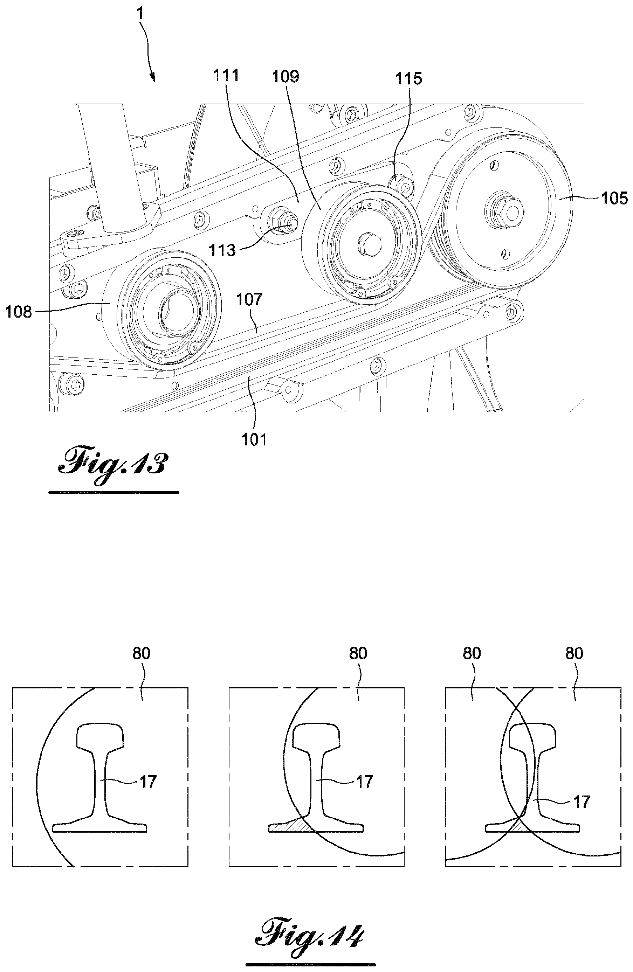

La figure 14 illustre les différents modes de coupe d'un rail. L'image à gauche montre le type de coupe consistant à couper l'intégralité du rail sans avoir à effectuer le retournement de la machine. Pour réaliser ce type de coupe, la machine doit être équipée d'un disque neuf. Les deux autres images illustrent une coupe en deux phases lorsque l'usure du disque a atteint un certain degré et son diamètre a diminué de façon qu'une coupe totale ne soit plus possible. Dans ce cas, conformément à l'image au milieu, l'opérateur en travaillant d'un premier côté coupe d'abord la totalité du champignon et de l'âme du rail, ainsi qu'une partie du patin, la partie hachurée restant non coupée. Après avoir mis le moteur au ralenti et attendu l'arrêt complet du disque, l'opérateur sort le disque de l'entame de la coupe et fait pivoter la machine de l'autre côté du rail de 180°, fait redémarrer la tronçonneuse et achève la coupe du rail, comme le montre l'image à droite.

Dans ce qui précède, on a décrit l'invention dans son mode de mise en oeuvre en utilisant une tronçonneuse de rail. Bien entendu, cette tronçonneuse peut être utilisée en la branchant à toute autre source de puissance électrique appropriée, portable ou même stationnaire.

Comme le montre la figure 1, le système selon l'invention peut être utilisé avec d'autres machines outil tel qu'un vibrateur montré en haut de la figure 1 et noté 2, une perceuse de rail 3 montrée au milieu et la boulonneuse à choc 4 montrée en bas. Mais ces machines ne font pas partie de l'invention.

Concernant le vibrateur 2, le câble de décharge de la batterie se branche sur le connecteur indiqué par la référence 121. La mise en route du vibrateur et son arrêt se fait par actionnement ou relâchement de la poignée 123. Le moteur électrique est refroidi par un flux d'air généré par un ventilateur électrique et qui traverse le moteur. Pour éviter que des particules de poussière soulevées par le travail de bourrage puissent parvenir au moteur, un filtre à air 125 est prévu dont le capot démontable a été ôté sur la figure. L'ensemble moteur, filtration et coffret électrique est recouvert par un capot en matière plastique non représenté. Un écran à LED 127 est présent afin d'indiquer la durée approximative de travail restant.

Concernant la perceuse de rail 3, qui est pourvue d'un étau 129 de fixation sur le rail, le câble de décharge de la batterie se branche sur le connecteur indiqué en 131.

En ce qui concerne la boulonneuse à choc 4, son connecteur multibroches de branchement du câble de décharge est indiqué en 133.

Comme cela a déjà été énoncé plus haut, chaque machine-outil est équipée d'une carte machine 77 spécifique qui lui est propre. Lorsqu'une machine-outil est raccordée à la batterie, par l'intermédiaire du cordon de décharge, la carte machine de la machine raccordée établit un dialogue avec la carte BMS, par l'intermédiaire du BUS CAN pour permettre l'identification de la machine grâce à un code d'identification que la carte machine envoie à la carte BMS. Lorsque la carte machine est identifiée, la carte BMS qui a pour fonction le pilotage de la carte de commutation, autorise la fermeture de la voie de décharge passant de la batterie, à travers la carte de commutation, la carte connecteur, le câble multifilaires, la carte machine et le contrôleur moteur au moteur. Le fonctionnement spécifique de chaque machine est géré par la carte machine qui dispose du programme de fonctionnement et envoie donc des commandes au contrôleur moteur pour le pilotage de celui-ci. La machine est alors prête à être utilisée si les conditions de mise en route sont réunies, c'est-à-dire si l'opérateur a actionné les organes de commande, dans le cas de la tronçonneuse la poignée de commande et le levier de sécurité correspondant au sens de rotation souhaité du disque de tronçonnage.

## Revendications

1. Système de tronçonneuse notamment pour rails de voie ferrée, comportant une tronçonneuse d'objets tels que des rails, équipée d'un moteur et d'un disque de tronçonnage (80), le système de tronçonneuse comportant un dispositif (18) de support et de fixation de la tronçonneuse sur un rail, qui comprend un étau (21) de fixation sur le rail et un dispositif de deux bras articulés (19, 20) portant un axe (22) sur lequel est montée pivotante la tronçonneuse et qui est ar-ticulé à l'étau (21) pour permettre le déplacement de la tronçonneuse, perpendiculairement à l'axe du rail, d'un côté de celui-ci à l'autre, dans une position dans laquelle, après retournement de la tronçonneuse sur l'axe (22), celle-ci est susceptible de tronçonner le rail, sans démontage du dispositif de support et de fixation, **caractérisé en ce que** le moteur est un moteur électrique, **en ce que** la tronçonneuse est pourvue à son extrémité opposée à celle du disque de tronçonnage (80) d'une poignée 86 de commande pourvue d'un levier pivotant 87 de commande du moteur pour que celui-ci fasse tourner le disque dans l'un ou l'autre sens de rotation par pivotement du levier vers le haut ou vers le bas, et **en ce que** le moteur électrique est alimenté en puissance par une batterie électrique (5) qui est reliée au moteur par un câble de déchargement de puissance (9).

2. Système selon la revendication 1, **caractérisé en ce que** le câble (9) est un câble multi filaire, souple et à échauffement limité.

3. Système de tronçonneuse selon l'une des revendications 1 ou 2, **caractérisé en ce que** la tronçonneuse comprend une douille (25) de réception de l'axe (22) du dispositif de support et fixation (18), dont le fond est pourvu d'un contact électrique destiné à être actionné par l'axe (22) du dispositif de support et fixation (18) lorsque la tronçonneuse est montée sur le dispositif de support et fixation (18).

4. Système de tronçonneuse selon la revendication 3, **caractérisé en ce que** la douille (28) de réception de l'axe du dispositif de support et fixation (18) est disposée sur un axe (X, X') passant par le centre du disque (80) et la poignée de commande (86, 87) de la machine située sur l'extrémité de la machine opposée à l'extrémité du côté disque, pour assurer les mêmes conditions de fonctionnement dans chaque sens de rotation du disque (80).

5. Système de tronçonneuse selon l'une des revendications 1 à 4, **caractérisé en ce que** la tronçonneuse comporte deux poignées de sécurité (88, 89) à contact intégré dont l'une est située au-dessus et l'autre en-dessous de la machine montée sur le dispositif (18) de support et fixation, dans un plan vertical, de façon que la poignée qui est la poignée inférieure dans la position de rotation du disque dans un sens, devient la poignée supérieure lorsque le disque tour-ne dans le sens inverse.

6. Système de tronçonneuse selon la revendication 5, **caractérisé en ce que** la tronçonneuse est en état de fonctionnement lorsque l'opérateur a monté la tronçonneuse sur son dispositif de support et fixation (18) et actionné le levier de commande (87) et la poignée de sécurité (88, 89) supérieure.

7. Système de tronçonneuse selon la revendication 6, **caractérisé en ce que** la tronçonneuse comprend un dispositif de transmission à courroie (101) de la rotation de l'arbre moteur à l'axe du disque dont le brin situé du côté de l'axe du dispositif (18) de support et fixation est dévié par un galet (108).

8. Système de tronçonneuse selon l'une des revendications 1 à 7, **caractérisé en ce que** la tronçonneuse comporte une carte machine spécifique (77) qui identifie la machine, est adaptée pour dialoguer avec la batterie (5) et est pourvue d'un programme de gestion du fonctionnement de la machine, en coopération avec la batterie.

9. Système de tronçonneuse selon l'une des revendi-cations 1 à 8, **caractérisé en ce que** la batterie (5) comporte une carte de commutation (53) de la voie de décharge et de la voie de charge de la batterie, et une carte BMS (51) de pilotage de la carte de commutation (53) adaptée pour dialoguer avec une carte machine.

10. Système de tronçonneuse selon l'une des revendications 1 à 9, **caractérisé en ce que** la batterie (5) est logée dans un boîtier (13) pourvu d'un dispositif interne d'amortissement de vibrations et de chocs.

11. Système de tronçonneuse selon la revendication 10, **caractérisé en ce que** le dispositif d'amortissement comporte un ensemble de cales souples (40, 41) maintenues en place par des entretoises (42).

12. Système de tronçonneuse selon l'une des revendications 1 à 11, **caractérisé en ce que** la batterie électrique (5) est disposée dans un ensemble (6) portable par l'opérateur de la tronçonneuse, tel qu'un sac à dos.

13. Système de tronçonneuse selon l'une des revendications précédentes, **caractérisé en ce que** l'étau (21) est en forme d'un U renversé dont la base est située au dessus du rail à tronçonner et **en ce que** le dispositif de bras comporte deux bras articulés entre eux dont l'un (20) est articulé à la base de l'étau, tandis que l'autre (19) porte à son extrémité libre l'axe (22) de pivotement de tronçonneuse.

## Patentansprüche

1. Schneidesystem, insbesondere für Arbeiten an Schienen einer Eisenbahnstrecke, umfassend eine Schneidevorrichtung von Gegenständen wie z. B. Schienen, ausgestattet mit einem Motor und mit einer Schneidescheibe (80), wobei das Schneidesystem eine Vorrichtung (18) zum Tragen und zum Befestigen der Schneidevorrichtung auf einer Schiene umfasst, die einen Schraubstock (21) zur Befestigung auf der Schiene und eine Vorrichtung mit zwei gelenkigen Armen (19, 20) umfasst, die eine Achse (22) trägt, auf der die Schneidevorrichtung schwenkend montiert ist, und die mit dem Schraubstock (21) gelenkig verbunden ist, um die Verschiebung der Schneidevorrichtung senkrecht zur Achse der Schiene von einer Seite derselben zur anderen in eine Position zu ermöglichen, in der, nach der Rückkehr der Schneidevorrichtung auf der Achse (22), diese dazu in der Lage ist, die Schiene ohne Demontage Vorrichtung zum Tragen und Befestigen zu schneiden, **dadurch gekennzeichnet, dass** der Motor ein elektrischer Motor ist, dadurch, dass die Schneidevorrichtung an ihrem dem Ende der Schneidescheibe (80) gegenüberliegenden Ende mit einem Bedienungsgriff (86) ausgestattet ist, der mit einem Schwenkhebel (87) zur Steuerung des Motors versehen ist, damit dieser die Scheibe in der einen oder der anderen Drehrichtung in Drehung versetzt, indem der Hebel nach oben oder nach unten geschwenkt wird, und dadurch, dass der elektrische Motor von einer elektrischen Batterie (5) mit Leistung versorgt wird, die mit dem Motor durch ein Leistungsentladungskabel (9) verbunden ist.

2. System nach Anspruch 1, **dadurch gekennzeichnet, dass** das Kabel (9) ein mehradriges, flexibles und durch begrenzte Erwärmung ausgezeichnetes Kabel ist.

3. Schneidesystem nach einem der Ansprüche 1 oder 2, **dadurch gekennzeichnet, dass** die Schneidevorrichtung eine Hülse (25) zur Aufnahme der Achse (22) der Vorrichtung zum Tragen und Befestigen (18) umfasst, deren Boden mit einem elektrischen Kontakt ausgestattet ist, der ausgelegt ist, um durch die Achse (22) der Vorrichtung zum Tragen und Befestigen (18) betätigt zu werden, wenn die Schneidevorrichtung auf der Vorrichtung zum Tragen und Befestigen (18) montiert ist.

4. Schneidesystem nach Anspruch 3, **dadurch gekennzeichnet, dass** die Hülse (28) zur Aufnahme der Achse der Vorrichtung zum Tragen und Befestigen (18) auf einer Achse (X, X') angeordnet ist, die durch die Mitte der Scheibe (80) und den Bedienungsgriff (86, 87) der Maschine, der sich auf dem Ende der Maschine gegenüber dem Ende des Scheibenseite befindet, verläuft, um die gleichen Betriebsbedingungen in jeder Drehrichtung der Scheibe (80) sicherzustellen.

5. Schneidesystem nach einem der Ansprüche 1 bis 4, **dadurch gekennzeichnet, dass** die Schneidevorrichtung zwei Sicherheitsgriffe (88, 89) mit integriertem Kontakt umfasst, wovon sich der eine über und der andere unter der Maschine, die auf der Vorrichtung zum Tragen und Befestigen (18) montiert ist, in einer vertikalen Ebene befindet, so dass der Griff, wobei es sich um den unteren Griff in der Drehposition der Scheibe in eine Richtung handelt, zum oberen Griff wird, wenn sich die Scheibe in der entgegengesetzten Richtung dreht.

6. Schneidesystem nach Anspruch 5, **dadurch gekennzeichnet, dass** sich die Schneidevorrichtung im Betriebszustand befindet, wenn der Bediener die Schneidevorrichtung auf ihrer Vorrichtung zum Tragen und Befestigen (18) montiert und den Steuerhebel (87) und den oberen Sicherheitsgriff (88, 89) betätigt hat.

7. Schneidesystem nach Anspruch 6, **dadurch gekennzeichnet, dass** die Schneidevorrichtung eine Vorrichtung zur Riemenübertragung (101) der Drehung der Motorwelle auf die Achse der Scheibe umfasst, deren Strang, der sich auf der Seite der Achse der Vorrichtung zum Tragen und Befestigen (18) befindet, durch eine Laufrolle (108) umgeleitet wird.

8. Schneidesystem nach einem der Ansprüche 1 bis 7, **dadurch gekennzeichnet, dass** die Schneidevorrichtung eine spezifische Maschinenkarte (77) umfasst, die die Maschine identifiziert, ausgelegt ist, um sich mit der Batterie (5) auszutauschen und mit einem Programm zur Verwaltung des Betriebs der Maschine in Zusammenarbeit mit der Batterie ausgestattet ist.

9. Schneidesystem nach einem der Ansprüche 1 bis 8, **dadurch gekennzeichnet, dass** die Batterie (5) eine Kommutationskarte (53) der Entladungsstrecke und der Ladungsstrecke der Batterie und eine BMS-Karte (51) zum Steuern der Kommutationskarte (53) umfasst, die ausgelegt ist, um sich mit einer Maschinenkarte auszutauschen.

10. Schneidesystem nach einem der Ansprüche 1 bis 9, **dadurch gekennzeichnet, dass** die Batterie (5) in einem Gehäuse (13) aufgenommen ist, das mit einer inneren Vorrichtung zum Dämpfen von Vibrationen und Stößen ausgestattet ist.

11. Schneidesystem nach Anspruch 10, **dadurch gekennzeichnet, dass** die Vorrichtung zum Dämpfen eine Einheit von flexible Keilen (40, 41) umfasst, die durch Abstandhalter (42) an ihrer Stelle gehalten werden.

12. Schneidesystem nach einem der Ansprüche 1 bis 11, **dadurch gekennzeichnet, dass** die elektrische Batterie (5) in einer Einheit (6) angeordnet ist, die vom Bediener der Schneidevorrichtung getragen werden kann, wie z. B. einem Rucksack.

13. Schneidesystem nach einem der vorhergehenden Ansprüche, **dadurch gekennzeichnet, dass** der Schraubstock (21) die Form eines umgekehrten U aufweist, dessen Basis sich über der zu schneidenden Schiene befindet, und dadurch, dass die Vorrichtung mit Armen zwei untereinander gelenkige Arme umfasst, von denen einer (20) an der Basis des Schraubstocks gelenkig verbunden ist, während der andere (19) an seinem freien Ende die Schwenkachse (22) der Schneidevorrichtung trägt.

## Claims

1. A cutting system, notably for rails of a railway line, including a rail saw for objects such as rails, equipped with a motor and a cutting disc (80), the cutting system including a device (18) for supporting and fastening the rail saw on a rail, which comprises a vise (21) for fastening onto the rail and a device with two articulated arms (19, 20) bearing an axle (22) on which the rail saw is pivotably mounted and which is articulated to the vise (21) to allow the rail saw to be displaced, perpendicularly to the axis of the rail, from one side thereof to the other, into a position in which, after reversing the rail saw on the axle (22), this rail saw is able to cut the rail, without disassembling the support and fastening device, **characterized in that** the motor is an electric motor, **in that** the rail saw is provided, at its end opposite that of the cutting disc (80), with a control handle (86) provided with a pivoting lever (87) for controlling the motor so that the motor turns the disc in one or the other direction of rotation by pivoting the lever upward or downward, and **in that** the electric motor is supplied with power by an electric battery (5) that is connected to the motor by a power discharge cable (9) .

2. The cutting system according to claim 1, **characterized in that** the cable (9) is a multicore, flexible cable with limited heating.

3. The cutting system according to one of claims 1 or 2, **characterized in that** the rail saw comprises a bushing (25) for receiving the axle (22) of the support and fastening device (18), the bottom of which is provided with an electrical contact intended to be actuated by the axle (22) of the support and fastening device (18) when the rail saw is mounted on the support and fastening device (18).

4. The cutting system according to claim 3, **characterized in that** the bushing (28) for receiving the axle of the support and fastening device (18) is arranged on an axis (X, X') passing through the center of the disc (80) and the control handle (86, 87) of the machine located at the end of the machine opposite the disc-side end, in order to ensure the same operating conditions in each direction of rotation of the disc (80).

5. The cutting system according to one of claims 1 to 4, **characterized in that** the rail saw includes two safety handles (88, 89) with integrated contacts, one of which is located above and the other below the machine mounted on the support and fastening device (18), in a vertical plane, in such a way that the handle which is the lower handle in the position of rotation of the disc in one direction, becomes the upper handle when the disc rotates in the opposite direction.

6. The cutting system according to claim 5, **characterized in that** the rail saw is in an operating state when the operator has mounted the rail saw on its support and fastening device (18) and actuated the control lever (87) and the upper safety handle (88, 89).

7. The cutting system according to claim 6, **characterized in that** the rail saw comprises a belt transmission device (101) for transmitting the rotation of the motor shaft to the axle of the disc, the strand of which is located on the side of the axle of the support and fastening device (18) is deflected by a roller (108).

8. The cutting system according to one of claims 1 to 7, **characterized in that** the rail saw includes a specific machine board (77) that identifies the machine, is able to dialog with the battery (5) and is provided with a program for managing the operation of the machine, in cooperation with the battery.

9. The cutting system according to one of claims 1 to 8, **characterized in that** the battery (5) includes a switching board (53) for the discharge path and for the charge path of the battery, and a BMS board (51) for controlling the switching board (53) able to dialog with a machine board.

10. The cutting system according to one of claims 1 to 9, **characterized in that** the battery (5) is housed in a package (13) provided with an internal device for damping vibrations and impacts.

11. The cutting system according to claim 10, **characterized in that** the damping device includes a set of flexible shims (40, 41) maintained in place by spacers (42).

12. The cutting system according to one of claims 1 to 11, **characterized in that** the electric battery (5) is arranged in an assembly (6) that can be carried by the operator of the rail saw, such as a backpack.

13. The cutting system according to one of the preceding claims, **characterized in that** the vise (21) is in the form of an inverted U, the base of which is located above the rail to be cut, and **in that** the arm device includes two arms articulated to one another, one (20) of which is articulated to the base of the vise, while the other (19) carries, at its free end, the pivot axle (22) of the rail saw.
